# EUROPEAN PATENT APPLICATION

(11) **EP 4 797 111 A1**
(43) Date of publication of application: **26.08.2026**
(21) Application number: 24881065.7
(22) Date of filing: 21.06.2024
(51) Int. Cl.: G06F 16/22

(54) **METHOD FOR PROCESSING DATA, SYSTEM, AND COMPUTING DEVICE CLUSTER**

(30) Priority: 27.10.2023 CN 202311412603
(71) Applicant: Huawei Cloud Computing Technologies Co., Ltd., Gui'an New District, Guizhou 550025 (CN)
(72) Inventor: WANG, Jiayuan, Guiyang, Guizhou 550025 (CN); ZENG, Kai, Guiyang, Guizhou 550025 (CN); ZHANG, Jian, Guiyang, Guizhou 550025 (CN); ZHANG, Wenliang, Guiyang, Guizhou 550025 (CN); REN, Bo, Guiyang, Guizhou 550025 (CN); WANG, Zhuo, Guiyang, Guizhou 550025 (CN)
(74) Representative: Goddar, Heinz J.
(86) International application number: PCT/CN2024/100660
(87) International publication number: WO 2025/086688

(57) **Abstract**

This application provides a data processing method and system, and belongs to the field of cloud computing technologies. The method includes: A data processing system receives a first write request, where the data processing system includes a first compute cluster, a second compute cluster, and a shared storage, the shared storage is used to store data of a first data table, the first write request is used to write first data into the first data table, and the first data table belongs to the first compute cluster. The second compute cluster writes, into the shared storage, the first data that belongs to the first data table. The second compute cluster sends, to the first compute cluster, first metadata corresponding to the first data. The first compute cluster stores the first metadata corresponding to the first data. The method can meet a requirement that an extended compute cluster supports data writing. In addition, a compute cluster to which a table belongs is still responsible for writing metadata corresponding to table data. This eliminates a need of for deploying an independent metadata management cluster. In this way, thereby reducing system costs and avoiding a performance bottleneck associated with the metadata management cluster has no performance bottleneck while system costs are reduced.

## Description

This application claims priority to Chinese Patent Application 202311412603.8, with the China National Intellectual Property Administration on October 27, 2023 and entitled "DATA PROCESSING METHOD AND SYSTEM, AND COMPUTE DEVICE CLUSTER", which is incorporated herein by reference in its entirety.

### TECHNICAL FIELD

This application relates to the field of cloud computing technologies, and in particular, to a data processing method and system, a compute device cluster, a computer-readable storage medium, and a computer program product.

### BACKGROUND

With development of cloud computing technologies, more and more users choose to store a large amount of data in the cloud and use data processing systems provided by cloud vendors to operate the data stored in the cloud. For users with high service pressure, a multi-cluster data processing system is usually used to improve overall read/write concurrency of the data processing systems, and data is shared across a plurality of clusters. How to provide a low-cost and high-performance data write solution for such multi-cluster data processing systems becomes an important technical challenge for major cloud vendors.

### SUMMARY

This application provides a data processing method, a corresponding data processing system, a compute device cluster, a computer-readable storage medium, and a computer program product.

According to a first aspect, this application provides a data processing method. The method includes: A data processing system receives a first write request, where the data processing system includes a first compute cluster, a second compute cluster, and a shared storage, the shared storage is used to store data of a first data table, the first data table belongs to the first compute cluster, and the first write request is used to write first data into the first data table. The second compute cluster writes, into the shared storage, the first data that belongs to the first data table. The second compute cluster sends, to the first compute cluster, first metadata corresponding to the first data. The first compute cluster stores the first metadata corresponding to the first data.

The data processing method provided in this application can meet a requirement that an extended compute cluster supports data writing. In addition, a compute cluster to which a table belongs is still responsible for writing metadata corresponding to table data. This eliminates a need for deploying an independent metadata management cluster, thereby reducing system costs and avoiding a performance bottleneck associated with the metadata management cluster.

In a possible implementation, the data processing method further includes:
the data processing system receives a second write request, where the second write request is used to write second data into the first data table.

The first compute cluster writes, into the shared storage, the second data that belongs to the first data table.

The first compute cluster stores metadata corresponding to the second data.

In the foregoing implementation, the first compute cluster also supports a data write operation, to improve a write concurrency bearing capability of the data processing system.

In a possible implementation, the data processing method further includes:
the data processing system generates an execution plan for responding to the first write request, where the execution plan includes an operator for cross-cluster metadata transmission.

That the second compute cluster sends, to the first compute cluster, the first metadata corresponding to the first data includes:
the second compute cluster executes the execution plan, to send, to the first compute cluster by using the operator for cross-cluster metadata transmission, the first metadata corresponding to the first data.

In a possible implementation, the data processing method further includes: determining a compute cluster with smallest load in the data processing system as the second compute cluster.

In the foregoing implementation, the data processing system has a flexible scheduling capability, and can select, based on load pressure of each compute cluster, a proper cluster to perform a data write operation, to implement load balancing of the entire data processing system, and avoid excessively high write pressure of a single compute cluster.

In a possible implementation, the shared storage is further configured to store data of a second data table, the second data table belongs to the first compute cluster, and the first data is from the second data table. Before the second compute cluster writes, into the shared storage, the first data that belongs to the first data table, the data processing method further includes:
the first compute cluster sends, to the second compute cluster, second metadata corresponding to the first data.

The second compute cluster reads, from the shared storage, the first data from the second data table based on the second metadata corresponding to the first data.

In a possible implementation, the data processing system further includes a third compute cluster. The shared storage is further configured to store data of a third data table. The third data table belongs to the third compute cluster, and the first data is from the third data table. Before the second compute cluster writes, into the shared storage, the first data that belongs to the first data table, the data processing method further includes:
the third compute cluster sends, to the second compute cluster, third metadata corresponding to the first data.

The second compute cluster reads, from the shared storage, the first data from the third data table based on the third metadata corresponding to the first data.

In the foregoing implementation, a compute cluster that performs a data write operation may read the data from another compute cluster to which table data belongs.

In a possible implementation, the data processing method further includes: The second compute cluster sends index data of the first data table to the first compute cluster. The first compute cluster stores the index data of the first data table.

According to a second aspect, this application provides a data processing system. The system includes: a cluster management module, configured to receive a first write request, where the first write request is used to write first data into a first data table; a shared storage, configured to store data of the first data table; a first compute cluster, where the first data table belongs to the first compute cluster; and a second compute cluster, configured to write, into the shared storage, the first data that belongs to the first data table, where the second compute cluster is further configured to send, to the first compute cluster, first metadata corresponding to the first data; and the first compute cluster is configured to store the first metadata corresponding to the first data.

In this embodiment of this application, the cluster management module is further configured to receive a second write request, where the second write request is used to write second data into the first data table. The first compute cluster is further configured to: write, into the shared storage, the second data that belongs to the first data table, and store metadata corresponding to the second data.

In a possible embodiment, the cluster management module is further configured to generate an execution plan for responding to the first write request, where the execution plan includes an operator for cross-cluster metadata transmission. That the second compute cluster is further configured to send, to the first compute cluster, the first metadata corresponding to the first data includes: The second compute cluster is further configured to execute the execution plan, to send, to the first compute cluster by using the operator for cross-cluster metadata transmission, the first metadata corresponding to the first data.

In a possible embodiment, the cluster management module is further configured to determine a compute cluster with smallest load in the data processing system as the second compute cluster.

In a possible embodiment, the shared storage is further configured to store data of a second data table, where the second data table belongs to the first compute cluster, and the first data is from the second data table. Before the second compute cluster writes, into the shared storage, the first data that belongs to the first data table, the first compute cluster is further configured to send, to the second compute cluster, second metadata corresponding to the first data. In addition, the second compute cluster is further configured to read, from the shared storage, the first data from the second data table based on the second metadata corresponding to the first data.

In a possible embodiment, the data processing system further includes a third compute cluster. The shared storage is further configured to store data of a third data table, where the third data table belongs to the third compute cluster, and the first data is from the third data table. Before the second compute cluster writes, into the shared storage, the first data that belongs to the first data table, the third compute cluster is configured to send, to the second compute cluster, third metadata corresponding to the first data. In addition, the second compute cluster is further configured to read, from the shared storage, the first data from the third data table based on the third metadata corresponding to the first data.

In a possible embodiment, the second compute cluster is further configured to send index data of the first data table to the first compute cluster. The first compute cluster is further configured to store the index data of the first data table.

According to a third aspect, this application provides a compute device cluster, including at least one compute device, and each compute device includes a processor and a memory. The processor of the at least one compute device is configured to execute instructions stored in the memory of the at least one compute device, to cause the compute device cluster to perform the data processing method according to any one of the first aspect or the possible implementations of the first aspect.

According to a fourth aspect, this application provides a computer program product including instructions. When the instructions are run by a compute device cluster, the compute device cluster is caused to perform the data processing method according to any one of the first aspect or the possible implementations of the first aspect.

According to a fifth aspect, this application provides a computer-readable storage medium, including computer program instructions. When the computer program instructions are executed by a compute device cluster, the compute device cluster performs the data processing method according to any one of the first aspect or the possible implementations of the first aspect.

### BRIEF DESCRIPTION OF DRAWINGS

FIG. 1 is a diagram of an architecture of a data processing system according to an embodiment of this application;
FIG. 2 is a diagram of a structure of a compute device according to an embodiment of this application;
FIG. 3 is a diagram of a structure of a compute device cluster according to an embodiment of this application; and
FIG. 4 is a diagram of an implementation of a compute device cluster according to an embodiment of this application.

### DESCRIPTION OF EMBODIMENTS

The following describes in detail technical solutions provided in this application with reference to accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples and are not used to limit the protection scope of this application.

In descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implicit definitions.

In this application, "at least one" means one or more, and "a plurality of" means two or more than two. "And/or" describes an association relationship between associated objects, and indicates that three relationships may exist. For example, A and/or B may indicate the following included cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

With development of cloud computing technologies, increasing users choose to store a large amount of data on a cloud, and use a data processing system provided by a cloud vendor to operate the data stored on the cloud. For users with high service pressure, a multi-cluster data processing system is usually used to improve an overall read/write concurrency capability of the data processing system, and data is shared between a plurality of clusters. How to provide a low-cost and high-performance data write solution for the multi-cluster data processing system becomes an important technical problem that needs to be resolved by major cloud vendors.

The following describes several existing data write solutions of the multi-cluster data processing system.

Multi-cluster data processing systems provided by some cloud vendors only support data sharing across a plurality of clusters, and cannot meet a requirement that an extended cluster also supports data writing. Specifically, when a home cluster (that is, an original compute cluster) of a data table is under high service pressure, a newly added extended cluster supports only reading data from the data table, and does not support writing data into the data table. Therefore, the newly added extended cluster cannot share write pressure of the original compute cluster, and a write concurrency processing capability of the entire data processing system remains a performance bottleneck.

Multi-cluster data processing systems provided by some other cloud vendors can meet the requirement that the extended cluster also supports the data writing, but use metadata management clusters to write, in a unified manner into metadata storage space, metadata generated during data writing by compute clusters. Such a multi-cluster write solution based on unified metadata management has the following problems. Metadata of all compute clusters is written in the metadata management cluster, and when service pressure is high, the metadata management cluster becomes a performance bottleneck of the entire data processing system. Table permission control information is in the metadata management cluster, and when the metadata management cluster is faulty, services of the entire data processing system are widely affected. An independent metadata management cluster needs to be deployed, the data writing cannot be completed by deploying only the compute clusters, which result in high system initialization costs.

To resolve at least one or more of the foregoing problems, this application provides a data processing method. The method can meet a requirement that an extended compute cluster supports data writing. In addition, a compute cluster to which a table belongs is still responsible for writing metadata corresponding to table data. This eliminates a need for deploying an independent metadata management cluster, thereby reducing system costs and avoiding a performance bottleneck associated with the metadata management cluster.

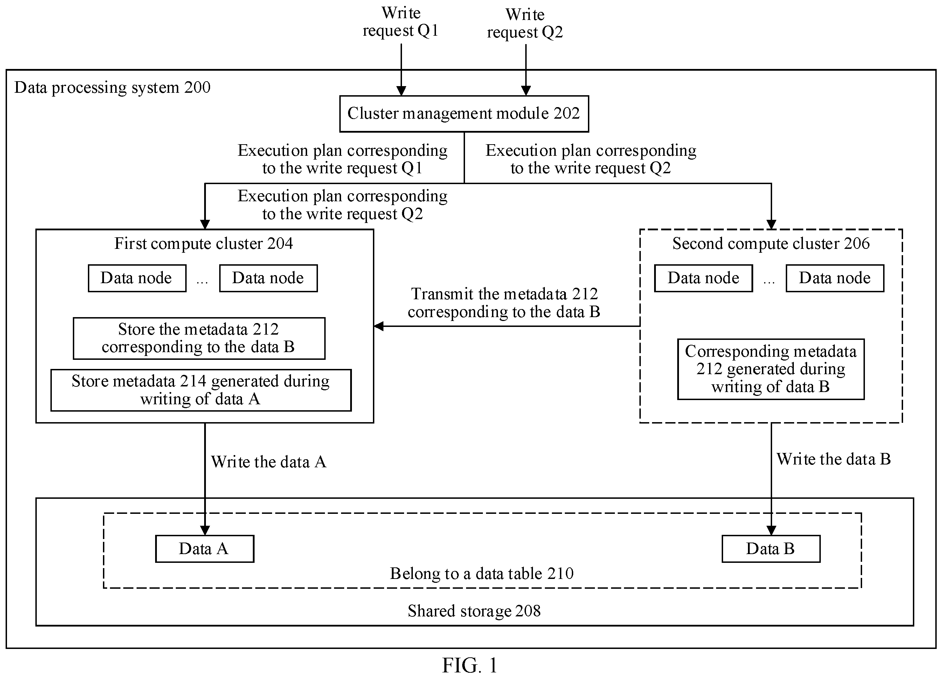

FIG. 1 is a diagram of an architecture of a data processing system 200 according to an embodiment of this application. The following first describes an application scenario of a data processing method provided in this application with reference to FIG. 1.

As shown in FIG. 1, a first compute cluster 204 is initially deployed in the data processing system 200, and a user may perform a write operation on table data by using the first compute cluster 204. The first compute cluster 204 is a home cluster of a data table 210, and data of the data table 210 is stored in a shared storage 208. For example, when user service pressure is low, after the data processing system 200 receives a write request Q1 for writing data A into the data table 210 and a write request Q2 for writing data B into the data table 210, both write operations of the data A and the data B are completed by the first compute cluster 204. In this embodiment of this application, a data write operation may be an insert operation, an update operation, or a delete operation of the table data.

As the user service pressure increases subsequently, a second compute cluster may be newly added to the data processing system 200 as an extended cluster, and is responsible for a write operation of data related to a newly added service. For example, the write request Q1 for writing the data A into the data table 210 is responded to by the first compute cluster 204, and the write request Q2 for writing the data B into the data table 210 is responded to by a second compute cluster 206. Specifically, the second compute cluster 206 is responsible for writing the data B into the shared storage, and sending, to the first compute cluster 204, metadata 212 generated during writing of the data B. The first compute cluster 204 is responsible for writing the data A into the shared storage and storing metadata 214 generated during writing of the data A, and is further responsible for storing the received metadata 212 corresponding to the data B.

In the data processing system 200, both the first compute cluster 204 and the second compute cluster 206 may include at least one data node, and the shared storage 208 may be a cloud storage like an object storage service (Object Storage Service, OBS). In addition, the data processing system 200 further includes a cluster management module 202, configured to: generate an execution plan corresponding to a write request, and deliver the execution plan to the first compute cluster 204 and the second compute cluster 206. In actual application, the data management system 200 may include more than two compute clusters, and the cluster management module may be deployed on a coordinator node (Coordinator Node, CN) in a data warehouse system or a database system.

The following describes, with reference to FIG. 1, a specific implementation of the data processing method provided in this application. The method includes the following step S301 to step S305.

S301: A data processing system receives a first write request, where the first write request is used to write first data into a first data table.

The data processing system includes a first compute cluster, a second compute cluster, and a shared storage, the shared storage is used to store data of the first data table, and the first data table belongs to the first compute cluster.

For example, the data processing system 200 receives the write request Q2 about the data B.

S302: The data processing system generates an execution plan for responding to the first write request, where the execution plan includes an operator for cross-cluster metadata transmission, an operator for writing data, and an operator for storing metadata.

For example, after receiving the write request Q2, the cluster management module 202 in the data processing system 200 generates a cross-cluster execution plan for the write request Q2, where the execution plan includes an operator for writing the data B, an operator for cross-cluster transmission of the metadata 212 corresponding to the data B, and an operator for storing the metadata 212 corresponding to the data B.

Specifically, the cluster management module 202 generates the execution plan corresponding to the write request Q2, and delivers the execution plan to the first compute cluster 204 and the second compute cluster 206.

In this embodiment of this application, the cluster management module 202 has a flexible scheduling capability, and can select, based on a load status of each compute cluster in the data management system 200, a compute cluster whose load is less than that of another compute cluster or whose load does not exceed a preset threshold, to perform a data write operation, to implement load balancing of the entire data processing system, and avoid excessively high write pressure of a single compute cluster.

In a possible embodiment, the cluster management module 202 may determine, based on load pressure of each compute cluster in the data management system 200, a compute cluster with smallest load in the data management system 200 as the second compute cluster 206 to perform the data write operation. Correspondingly, the cluster management module 202 delivers, to a home cluster of data and the compute cluster with the smallest load, the execution plan corresponding to the write request.

In a possible embodiment, the data processing system supports load isolation, and different users are bound to different compute clusters. The cluster management module 202 may select, based on a binding relationship between a user and a compute cluster, the compute cluster corresponding to the user, to execute an execution plan corresponding to a write request of the user. For example, the data processing system 202 binds a user M to the second compute cluster 206 in advance. In this case, after the data processing system 202 receives the write request Q2 delivered by the user M, the cluster management module 202 delivers, to the second compute cluster 206, the execution plan corresponding to the write request Q2, so that the second compute cluster 206 is responsible for writing, into the shared storage, the data B that belongs to the data table 210.

S303: The second compute cluster writes, into the shared storage, the first data that belongs to the first data table.

Specifically, the second compute cluster executes the execution plan corresponding to the first write request, to write, into the shared storage by using the operator for writing data, the first data that belongs to the first data table.

In a possible embodiment, when writing the first data into the shared storage, the second compute cluster may organize the first data into a columnar storage compression unit in a specific format before performing writing.

S304: The second compute cluster sends, to the first compute cluster, first metadata corresponding to the first data.

The first metadata corresponding to the first data is metadata generated during a process in which the second compute cluster writes the first data into the shared storage.

In a possible embodiment, the first metadata includes but is not limited to a location of the columnar storage compression unit in the shared storage, a size of the columnar storage compression unit, a maximum value or a minimum value of data in the columnar storage compression unit, and transaction information.

Specifically, the second compute cluster executes the execution plan corresponding to the first write request, to send, to the first compute cluster by using the operator for cross-cluster metadata transmission, the first metadata corresponding to the first data.

In a possible embodiment, after writing, into the shared storage, the first data that belongs to the first data table, the second compute cluster further generates index data of the first data table. In this case, the second compute cluster also sends the index data of the first data table to the first compute cluster by using the operator for cross-cluster metadata transmission.

S305: The first compute cluster stores the first metadata corresponding to the first data.

Specifically, the first compute cluster writes, into a local compute node of the first compute cluster, the first metadata corresponding to the first data.

In a possible embodiment, the first compute cluster further receives the index data of the first data table from the second compute cluster. In this case, the first compute cluster further stores the index data corresponding to the first data table. Specifically, the first compute cluster writes, into the local compute node of the first compute cluster, the index data corresponding to the first data table.

In this embodiment of this application, data write performance of the first compute cluster is not lower than data write performance of the second compute cluster, and the first compute cluster may also process a data write operation and store metadata generated during the data write operation. For example, the first compute cluster 204 writes the data A into the shared storage in response to the write request Q1. Therefore, the data processing method provided in this application further includes the following steps S401 to S403.

S401: The data processing system receives a second write request, where the second write request is used to write second data into the first data table.

S402: The first compute cluster writes, into the shared storage, the second data that belongs to the first data table.

S403: The first compute cluster stores metadata corresponding to the second data.

The metadata corresponding to the second data is metadata generated during a process in which the first compute cluster writes, into the shared storage, the second data that belongs to the first data table.

In actual application, the data processing method provided in this application further includes a process of obtaining the first data. The following describes several application scenarios by using examples.

In a possible application scenario, the shared storage is further configured to store data of a second data table, the second data table belongs to the first compute cluster, and the first write request is specifically used to insert first data from the second data table into the first data table. In this scenario, before the second compute cluster writes, into the shared storage, the first data that belongs to the first data table, a process of obtaining the first data from the second data table includes:
the first compute cluster sends, to the second compute cluster, second metadata corresponding to the first data.

The second compute cluster reads, from the shared storage, the first data from the second data table based on the second metadata corresponding to the first data.

In another possible application scenario, the data processing system further includes a third compute cluster, the shared storage is further configured to store data of a third data table, the third data table belongs to the third compute cluster, and the first write request is specifically used to insert first data from the third data table into the first data table. In this scenario, before the second compute cluster writes, into the shared storage, the first data that belongs to the first data table, a process of obtaining the first data from the third data table includes:
the third compute cluster sends, to the second compute cluster, third metadata corresponding to the first data.

The second compute cluster reads, from the shared storage, the first data from the third data table based on the third metadata corresponding to the first data.

In the data processing method provided in this application, a compute cluster that performs a data write operation sends, to a home cluster of data, metadata generated during data writing, and each compute cluster in the data processing system can support data writing, to help improve a write concurrency bearing capability of a multi-cluster data processing system.

In addition, according to the data processing method provided in this application, the data processing system can have a more flexible elastic expansion capability. When user service pressure increases, an extended cluster may be newly added temporarily to the data processing system to perform a write operation of table data that belongs to an original compute cluster. In addition, a home cluster of the table data is still responsible for writing metadata corresponding to the table data, and the extended cluster only needs to remotely transmit, to the home cluster of the table data, metadata generated during table data writing. When the extended cluster shares the write operation of the table data, the metadata of the table data is still written by the original home cluster of the table data. In this way, when the extended cluster needs to be removed after the service pressure decreases, the metadata does not need to be redistributed, and the home cluster of the table data directly takes over all services.

As shown in FIG. 1, this application further provides a data processing system 200. The system includes a cluster management module 202, a first compute cluster 204, a second compute cluster 206, and a shared storage 208.

The cluster management module 202 is configured to receive a first write request, where the first write request is used to write first data into a first data table.

The shared storage 208 is configured to store data of the first data table.

The second compute cluster 206 is configured to write, into the shared storage 208, the first data that belongs to the first data table, where the first data table belongs to the first compute cluster 204.

The second compute cluster 206 is further configured to send, to the first compute cluster 204, first metadata corresponding to the first data.

The first compute cluster 204 is configured to store the first metadata corresponding to the first data.

In this embodiment of this application, the cluster management module 202 is further configured to receive a second write request, where the second write request is used to write second data into the first data table. The first compute cluster 204 is further configured to: write, into the shared storage 208, the second data that belongs to the first data table, and store metadata corresponding to the second data.

In a possible embodiment, the cluster management module 202 is further configured to generate an execution plan for responding to the first write request, where the execution plan includes an operator for cross-cluster metadata transmission. That the second compute cluster 206 is further configured to send, to the first compute cluster 204, the first metadata corresponding to the first data includes: The second compute cluster 206 is configured to execute the execution plan, to send, to the first compute cluster 204 by using the operator for cross-cluster metadata transmission, the first metadata corresponding to the first data.

In a possible embodiment, the cluster management module 202 is further configured to determine the compute cluster with the smallest load in the data processing system 200 as the second compute cluster 206.

In a possible embodiment, the shared storage 208 is further configured to store data of a second data table, the second data table belongs to the first compute cluster 204, and the first data is from the second data table. Before the second compute cluster writes, into the shared storage 208, the first data that belongs to the first data table, the first compute cluster 204 is further configured to send, to the second compute cluster 206, second metadata corresponding to the first data. In addition, the second compute cluster 206 is further configured to read, from the shared storage 208, the first data from the second data table based on the second metadata corresponding to the first data.

In a possible embodiment, the data processing system 200 further includes a third compute cluster. The shared storage 208 is further configured to store data of a third data table, where the third data table belongs to the third compute cluster, and the first data is from the third data table. Before the second compute cluster 206 writes, into the shared storage 208, the first data that belongs to the first data table, the third compute cluster is configured to send, to the second compute cluster 206, third metadata corresponding to the first data. In addition, the second compute cluster 206 is further configured to read, from the shared storage 208, the first data from the third data table based on the third metadata corresponding to the first data.

In a possible embodiment, the second compute cluster 206 is further configured to send index data of the first data table to the first compute cluster 204. The first compute cluster 204 is further configured to store the index data of the first data table.

The data processing system 200 provided in this application can be configured to implement the data processing method provided in any one of the possible implementations in the foregoing method embodiment of this application. Specifically, for specific implementations of various operations of the data processing method performed by the data processing system 200, refer to the descriptions of the related content in the foregoing method embodiment. Details are not described herein again.

In this embodiment of this application, the data processing system 200 may be implemented by using software, or may be implemented by using hardware. The following describes an implementation of the cluster management module 202 by using examples. For implementations of the first compute cluster 204, the second compute cluster 206, and the shared storage 208, refer to the implementation of the cluster management module 202.

A module is used as an example of a software functional unit, and the module may include code run on a compute instance. The compute instance may be at least one of compute devices such as a physical host (compute device), a virtual machine, and a container. Further, there may be one or more compute devices. For example, a node may include code run on a plurality of hosts, virtual machines, or containers. It should be noted that the plurality of hosts, virtual machines, or containers configured to run the code may be distributed in a same AZ, or may be distributed in different AZs. Each AZ includes one data center or a plurality of geographically adjacent data centers. The plurality of hosts, virtual machines, or containers configured to run the code may be distributed in a same region, or may be distributed in different regions. Usually, one region may include a plurality of AZs, and a VPC is disposed in one region. For communication between two VPCs in a same region or between VPCs in different regions, a communication gateway needs to be provided in each VPC, and interconnection between VPCs is implemented through the communication gateway.

Similarly, the plurality of hosts, virtual machines, or containers configured to run the code may be distributed on a same VPC, or may be distributed on a plurality of VPCs. Usually, one region may include the plurality of AZs.

A module is used as an example of a hardware functional unit, and the module may include at least one compute device like a server. Alternatively, the module may be a device implemented using an ASIC or implemented using a PLD, or the like. The PLD may be implemented by a CPLD, an FPGA, GAL, or any combination thereof.

A plurality of compute devices included in the module may be distributed in a same AZ, or may be distributed in different AZs. The plurality of compute devices included in the module may be distributed in a same region, or may be distributed in different regions. Similarly, the plurality of compute devices included in the module may be distributed in a same VPC, or may be distributed in a plurality of VPCs. The plurality of compute devices may be any combination of compute devices such as the server, the ASIC, the PLD, the CPLD, the FPGA, and the GAL.

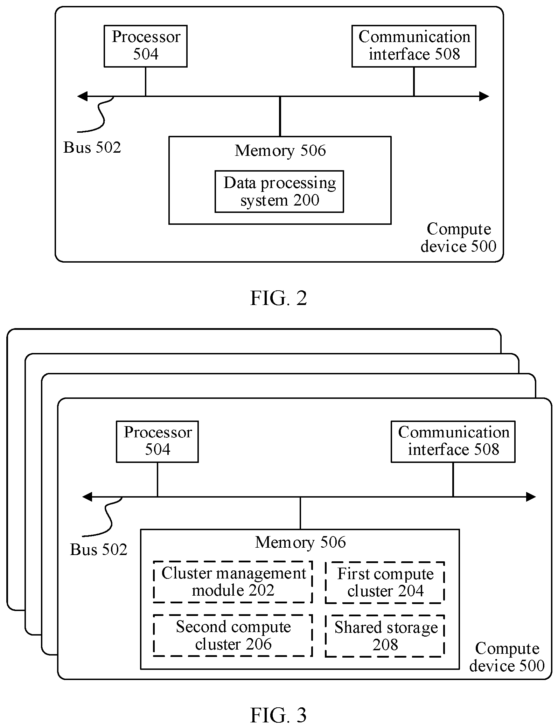

This application further provides a compute device 500. FIG. 2 is a diagram of a structure of the compute device 500. The compute device 500 includes a bus 502, a processor 504, a memory 506, and a communication interface 508. The processor 504, the memory 506, and the communication interface 508 communicate with each other through the bus 502. The compute device 500 may be a server or a terminal device. It should be understood that quantities of processors and memories in the compute device 500 are not limited in this application.

The bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line represents the bus in FIG. 2, but this does not mean that there is only one bus or one type of bus. The bus 502 may include a path for transferring information between components (for example, the memory 506, the processor 504, and the communication interface 508) of the compute device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). Alternatively, the memory 506 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of the cluster management module 202, the first compute cluster 204, the second compute cluster 206, and the shared storage 208 in the foregoing data processing system 200, to implement a data processing method. That is, the memory 506 stores instructions for performing the data processing method.

The communication interface 508 uses, for example but not limited to, a transceiver module like a network interface card or a transceiver, to implement communication between the compute device 500 and another device or a communication network.

This application further provides a compute device cluster. FIG. 3 is a diagram of the compute device cluster. The compute device cluster may implement the data processing method in the foregoing embodiment. As shown in FIG. 3, the compute device cluster includes at least one compute device 500 shown in FIG. 2. The compute device 500 may be a server, for example, a central server, an edge server, or a local server in a local data center. In some embodiments, the compute device may alternatively be a terminal device, for example, a desktop computer, a notebook computer, or a smartphone.

A memory 506 in one or more compute devices 500 in the compute device cluster may store instructions for performing the data processing method. When the at least one compute device in the compute device cluster executes the instructions, the compute device cluster may be caused to implement the data processing method as described in the embodiment.

In some possible implementations, the memory 506 in one or more compute devices 500 in the compute device cluster may alternatively separately store a part of instructions for performing the data processing method. In other words, a combination of the one or more compute devices 500 may jointly execute the instructions for performing the data processing method.

It should be noted that memories 506 in different compute devices 500 in the compute device cluster may store different instructions, respectively used to perform some functions of a data processing system. To be specific, the instructions stored in the memories 506 in the different compute devices 500 may separately implement a function of a cluster management module 202, a first compute cluster 204, a second compute cluster 206, or a shared storage 208 in the data processing system.

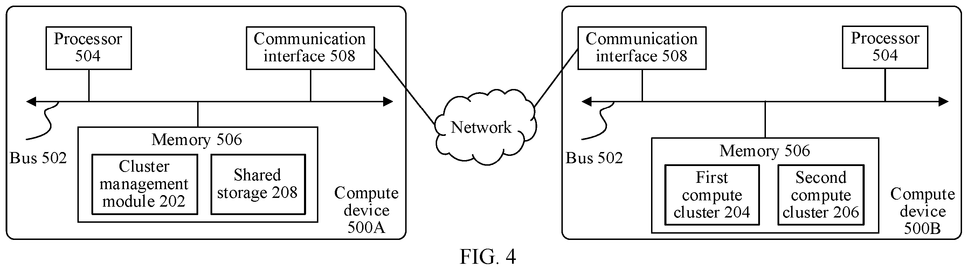

In some possible implementations, the one or more compute devices in the compute device cluster may be connected through a network. The network may be a wide area network, a local area network, or the like. FIG. 4 shows a possible implementation. As shown in FIG. 4, two compute devices 500A and 500B are connected through a network. Specifically, each compute device is connected to the network through a communication interface in the compute device. In this type of possible implementation, a memory 506 in the compute device 500A stores instructions for executing functions of a cluster management module 202 and a shared storage 208 in a data processing system. In addition, a memory 506 in the compute device 500B stores instructions for executing functions of a first compute cluster 204 and a second compute cluster 206 in the data processing system.

It should be understood that a function of the compute device 500A shown in FIG. 4 may alternatively be completed by a plurality of compute devices 500. Similarly, a function of the compute device 500B may alternatively be completed by a plurality of compute devices 500.

This application further provides a computer program product including instructions. The computer program product may be software or a program product that includes instructions and that can run on a compute device or can be stored in any usable medium. When the computer program product runs on at least one compute device, the at least one compute device is caused to perform the data processing method.

This application further provides a computer-readable storage medium. The computer-readable storage medium may be any usable medium that can be stored in a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the compute device to perform the data processing method, or instruct the compute device to perform the data processing method.

Finally, it should be noted that the foregoing embodiments are merely intended to describe the technical solutions of the present invention, but not to limit the present invention. Although the present invention is described in detail with reference to the foregoing embodiments, a person of ordinary skill in the art should understand that the person of ordinary skill in the art may still make modifications to the technical solutions described in the foregoing embodiments or make an equivalent replacement to a part of technical features thereof. However, these modifications and the replacement do not make the essence of the corresponding technical solutions depart from the protection scope of the technical solutions of embodiments of the present invention.

## Claims

1. A data processing method, wherein the method comprises:
receiving, by a data processing system, a first write request, wherein the data processing system comprises a first compute cluster, a second compute cluster, and a shared storage, the shared storage is used to store data of a first data table, the first data table belongs to the first compute cluster, and the first write request is used to write first data into the first data table;
writing, into the shared storage by the second compute cluster, the first data that belongs to the first data table;
sending, to the first compute cluster by the second compute cluster, first metadata corresponding to the first data; and
storing, by the first compute cluster, the first metadata corresponding to the first data.

2. The method according to claim 1, wherein the method further comprises:
receiving, by the data processing system, a second write request, wherein the second write request is used to write second data into the first data table;
writing, into the shared storage by the first compute cluster, the second data that belongs to the first data table; and
storing, by the first compute cluster, metadata corresponding to the second data.

3. The method according to claim 1 or 2, wherein the method further comprises:
generating, by the data processing system, an execution plan for responding to the first write request, wherein the execution plan comprises an operator for cross-cluster metadata transmission; and
the sending, to the first compute cluster by the second compute cluster, the first metadata corresponding to the first data comprises:
executing, by the second compute cluster, the execution plan, to send, to the first compute cluster by using the operator for cross-cluster metadata transmission, the first metadata corresponding to the first data.

4. The method according to any one of claims 1 to 3, wherein the method further comprises:
determining a compute cluster with smallest load in the data processing system as the second compute cluster.

5. The method according to any one of claims 1 to 4, wherein the shared storage is further configured to store data of a second data table, the second data table belongs to the first compute cluster, the first data is from the second data table, and before the writing, into the shared storage by the second compute cluster, the first data that belongs to the first data table, the method further comprises:
sending, to the second compute cluster by the first compute cluster, second metadata corresponding to the first data; and
reading, from the shared storage by the second compute cluster, the first data from the second data table based on the second metadata corresponding to the first data.

6. The method according to any one of claims 1 to 4, wherein the data processing system further comprises a third compute cluster, the shared storage is further configured to store data of a third data table, the third data table belongs to the third compute cluster, the first data is from the third data table, and before the writing, into the shared storage by the second compute cluster, the first data that belongs to the first data table, the method further comprises:
sending, to the second compute cluster by the third compute cluster, third metadata corresponding to the first data; and
reading, from the shared storage by the second compute cluster, the first data from the third data table based on the third metadata corresponding to the first data.

7. The method according to any one of claims 1 to 6, wherein the method further comprises:
sending, by the second compute cluster, index data of the first data table to the first compute cluster; and
storing, by the first compute cluster, the index data of the first data table.

8. A data processing system, wherein the system comprises:
a cluster management module, configured to receive a first write request, wherein the first write request is used to write first data into a first data table;
a shared storage, configured to store data of the first data table;
a first compute cluster, wherein the first data table belongs to the first compute cluster; and
a second compute cluster, configured to write, into the shared storage, the first data that belongs to the first data table, wherein
the second compute cluster is further configured to send, to the first compute cluster, first metadata corresponding to the first data; and
the first compute cluster is configured to store the first metadata corresponding to the first data.

9. The system according to claim 8, wherein
the cluster management module is further configured to receive a second write request, wherein the second write request is used to write second data into the first data table;
the first compute cluster is further configured to write, into the shared storage, the second data that belongs to the first data table; and
the first compute cluster is further configured to store metadata corresponding to the second data.

10. The system according to claim 8 or 9, wherein
the cluster management module is further configured to generate an execution plan for responding to the first write request, wherein the execution plan comprises an operator for cross-cluster metadata transmission; and
that the second compute cluster is further configured to send, to the first compute cluster, the first metadata corresponding to the first data comprises:
the second compute cluster is configured to execute the execution plan, to send, to the first compute cluster by using the operator for cross-cluster metadata transmission, the first metadata corresponding to the first data.

11. The system according to any one of claims 8 to 10, wherein
the cluster management module is further configured to determine a compute cluster with smallest load in the data processing system as the second compute cluster.

12. The system according to any one of claims 8 to 11, wherein
the shared storage is further configured to store data of a second data table, wherein the second data table belongs to the first compute cluster, and the first data is from the second data table;
before the second compute cluster writes, into the shared storage, the first data that belongs to the first data table, the first compute cluster is further configured to send, to the second compute cluster, second metadata corresponding to the first data; and
the second compute cluster is further configured to read, from the shared storage, the first data from the second data table based on the second metadata corresponding to the first data.

13. The system according to any one of claims 8 to 11, wherein
the data processing system further comprises a third compute cluster;
the shared storage is further configured to store data of a third data table, wherein the third data table belongs to the third compute cluster, and the first data is from the third data table;
before the second compute cluster writes, into the shared storage, the first data that belongs to the first data table, the third compute cluster is configured to send, to the second compute cluster, third metadata corresponding to the first data; and
the second compute cluster is further configured to read, from the shared storage, the first data from the third data table based on the third metadata corresponding to the first data.

14. The system according to any one of claims 8 to 13, wherein
the second compute cluster is further configured to send index data of the first data table to the first compute cluster; and
the first compute cluster is further configured to store the index data of the first data table.

15. A compute device cluster, comprising at least one compute device, and each compute device comprises a processor and a memory; and
the processor of the at least one compute device is configured to execute instructions stored in the memory of the at least one compute device, to cause the compute device cluster to perform the data processing method according to any one of claims 1 to 7.

16. A computer program product comprising instructions, wherein when the instructions are run on a compute device cluster, the compute device cluster is caused to perform the data processing method according to any one of claims 1 to 7.

17. A computer-readable storage medium, comprising computer program instructions, wherein when the computer program instructions are executed by a compute device cluster, the compute device cluster performs the data processing method according to any one of claims 1 to 7.
